Europäisches Patentamt

European Patent Office

Office européen des brevets

(19)

(11) **EP 0 578 544 B1**

(12) **FASCICULE DE BREVET EUROPEEN**

(45) Date de publication et mention
de la délivrance du brevet:
**10.09.1997 Bulletin 1997/37**

(51) Int Cl.[6]: **G01S 13/95**

(21) Numéro de dépôt: **93401713.8**

(22) Date de dépôt: **01.07.1993**

(54) **Procédé et dispositif pour l'évaluation des précipitations sur une zone de terrain**

Verfahren und Vorrichtung zur Gebietsniederschlagsbewertung

Procedure and apparatus for evaluating field precipitation

(84) Etats contractants désignés:
AT BE CH DE DK ES GB IT LI NL PT SE

(30) Priorité: **09.07.1992 FR 9208545**

(43) Date de publication de la demande:
**12.01.1994 Bulletin 1994/02**

(73) Titulaire: **RHEA**
**92000 Nanterre (FR)**

(72) Inventeurs:
• **Badoche-Jacquet, Guy**
**F-92420 Vaucresson (FR)**
• **Blanchet, Frédéric**
**F-78400 Chatou (FR)**
• **Blanchet, Béatrice**
**F-78400 Chatou (FR)**

(74) Mandataire: **Plaçais, Jean-Yves et al**
**Cabinet Netter,**
**40, rue Vignon**
**75009 Paris (FR)**

(56) Documents cités:
• **Proceedings of IVth Int. Conference on Urban Storm Drainage, Ecole Polytechnique Fédérale, Lausanne, Suisse; Andrieu et al.: "About Radar Rainfall Measurement"; 8/9-1987**
• **Conférence de Salford, Symposium on the Hydrological Application of Weather Radar; Blanchet et al.: "Improvement of rainfall measurements due to accurate synchronization of raingauges and due to advection use in calibration"; 8-1989**
• **Session 123, Comité Technique de la Société hydrotechnique de France, La Houille Blanche; G. JACQUET et al.: "Intérêt technique et économique des radars d'investigation des précipitations en matière d'assainissement urbain"; 5/6-83**
• **JOURNAL OF HYDROLOGY no. 114, 1990, Amsterdam, pp 229-244; EINFALT et al.: 'A RADAR RAINFALL FORECASTING METHOD DESIGNED FOR HYDROLOGICAL PURPOSES'**

## Description

L'invention concerne la pluviométrie.

Phénomène ancestral, la pluie reste aujourd'hui difficile à quantifier. On dispose bien sûr de pluviomètres, capables de mesurer la quantité d'eau pluviale reçue en un point précis. On dispose aussi de radars dits météorologiques, capables de repérer des formations pluviogènes, et permettant d'estimer les précipitations qui leur sont dues. La difficulté est de déterminer aussi exactement que possible quelle est la quantité d'eau qui tombe sur chaque kilomètre carré d'une zone de terrain assez étendue (typiquement plusieurs dizaines à plusieurs milliers de $km^2$).

Les caractéristiques assez complexes des formations pluviogènes, de leurs mouvements, et de leur aptitude à se transformer en pluie font qu'on connaît mal le volume exact des précipitations qui tombent sur chaque $km^2$ de zones de terrain assez étendues, sauf à les tapisser de pluviomètres, ce qui n'est manifestement pas d'application générale.

Or, il est important de connaître précisément les quantités d'eaux pluviales tombées en quelques minutes sur chaque $km^2$ de zones de terrain assez étendues. En zone rurale, cela peut par exemple permettre de prévoir des ruissellements excessifs; ceux-ci sont générateurs d'érosion, et entraînent un lessivage des engrais et des pesticides, une destruction des cultures, ou pire, des crues torrentielles.

En zone urbaine, la connaissance précise de l'intensité des précipitations est utile pour la gestion de l'évacuation des eaux, et l'évitement d'inondations ou de pollutions intempestives.

Cette situation de méconnaissance des précipitations perdure, bien que de nombreuses études aient été effectuées :

- "Intérêt technique et économie des radars d'investigation des précipitations en matière d'assainissement urbain", G. JACQUET, Session n° 123, Comité technique de la Société Hydrotechnique de France, La Houille Blanche n° 5/6, 15 juin 1983;
- "Premiers résultats de l'expérience Radar RODIN sur les départements du Val-de-Marne et de Seine-Saint-Denis", G. JACQUET, H. ANDRIEU, Session n° 123, Comité technique de la Société Hydrotechnique de France, La Houille Blanche n° 5/6, 16 juin 1983;
- "About radar rainfall measurement", H. ANDRIEU, T. DENOEUX, G. JACQUET, Proceedings of IVth Int. Conference on urban storm drainage, École Polytechnique Fédérale - Lausanne - SUISSE, pp 25-30, 31/8 - 4/9 1987;
- "Improvement on Rainfall Measurements due to accurate synchronisation of raingauges and due to advection use in calibration", B. BLANCHET, A. NEUMANN, G. JACQUET, H. ANDRIEU, Conférence de Salford, Symposium on the hydrological application of weather radar, Août 1989;
- "Radar data for Hydrological Users", J. CHEZE, G. JACQUET, Seminar on Weather Radar Networking, Bruxelles, 5-8 Septembre 1989;
- "A radar Rainfall Forecasting Method Designed for Hydrological Purposes", T. EINFALT, T. DENOEUX, G.JACQUET, Journal of Hydrology, 114, pp 229-244, 1990.

Un point récent a été fait dans l'ensemble des communications présentées dans les "Proceedings of the 25th International Conference on radar meteorology of the American Meteorology Society", June 24-28, 1991, PARIS, FRANCE.

C'est dans ces conditions que la présente invention vient fournir des moyens permettant, pour la première fois, une évaluation réellement satisfaisante des précipitations sur une zone de terrain.

Le procédé proposé à cet effet comprend la combinaison des étapes suivant la revendication 1.

Ceci permet une excellente estimation des précipitations en chaque kilomètre carré de la zone de terrain.

Très avantageusement, la périodicité radar est au plus égale à 6 minutes environ; la durée du premier intervalle de temps est au plus égale à 6 minutes environ; la durée du second intervalle de temps est au plus égale à 30 minutes environ.

Selon un autre aspect de l'invention, l'opération c) comprend, avant l'analyse, une opération c1) de traitement d'échos de sol, comportant:

c11) une préanalyse globale de l'image radar pour déterminer si elle concerne un temps sec ou pluvieux,
c12) la mise à jour d'une carte d'échos de sol radar s'il s'agit de temps sec, et
c13) s'il s'agit de temps pluvieux, le remplacement des points appartenant à la carte d'échos de sol radar par des pixels extrapolés d'images précédentes.

Selon encore un autre aspect de l'invention, l'opération c) comprend:

c2) la recherche dans l'image en cours de cellules pluviogènes principales, sous forme de blocs de pixels satisfaisant une condition choisie de niveau, avec rapprochement de ces cellules pluviogènes principales avec celles issues d'images précédentes, pour la poursuite dynamique de leur forme et de leur mouvement, ainsi que
c3) la détermination d'un mouvement moyen des pixels extérieurs aux cellules pluviogènes dans l'image en cours, par rapport à au moins une image précédente,

tandis que l'étape d) comprend:

d1) l'estimation des précipitations cumulées dues aux cellules pluviogènes principales en fonction des niveaux de leurs pixels interpolés compte-tenu de la vitesse propre de chaque cellule, et
d2) l'estimation des précipitations cumulées dues aux pixels situés hors des cellules pluviogènes, en fonction de leur niveau compte-tenu de leur mouvement moyen.

Bien entendu, l'invention s'étend aux dispositifs pour la mise en oeuvre de ce procédé, en ses différentes variantes. D'autres caractéristiques et avantages de l'invention apparaîtront à l'examen de la description détaillée ci-après et des dessins annexés, sur lesquels :

- la figure 1 illustre schématiquement une zone de terrain d'environ 1000 km$^2$, surveillée par un radar, et sur laquelle sont implantés des pluviomètres, schématisés par des "x";

- la figure 2 illustre schématiquement les liaisons du radar et des pluviomètres à une station de traitement;

- la figure 3 est un exemple d'image à 16 niveaux représentant des intensités de pluie, obtenue à l'aide du radar pour la zone de terrain de la figure 1;

- la figure 4 illustre l'image de la figure 3, retraitée par application d'un seuil de niveau;

- la figure 5 illustre une image semblable à celle de la figure 4, mais valable cinq minutes auparavant;

- la figure 6 est un schéma-bloc général;

- la figure 7 est un schéma-bloc d'un traitement d'échos de sol;

- la figure 8 est un schéma-bloc d'un traitement d'advection;

- la figure 9 est un schéma-bloc d'un traitement de cumul pour obtenir la carte radar cumulée;

- la figure 10 est une image advectée, tirée des images des figures 4 et 5;

- la figure 11 est une première carte pluviométrique radar, correspondant au cumul brut des images des figures 4 et 5, sans prise en compte des mouvements des cellules pluviogènes, ni calibration par les pluviomètres;

- la figure 12 est une seconde carte semblable à celle de la figure 11, mais prenant en compte les mouvements des cellules pluviogènes;

- la figure 13 est une troisième carte semblable à celle de la figure 12, mais avec calibration par les pluviomètres;

- la figure 14 est une quatrième carte semblable à celle de la figure 13, mais après re-synchronisation des données radar;

- la figure 15 est un tableau comparatif des données radar et de celles des pluviomètres, pour des cas semblables à ceux des figures 13 et 14.

- la figure 16 est un graphique illustrant un exemple de rapprochement statistique des données radar et de celles des pluviomètres, pour des cas semblables à ceux des figures 13 et 14.

Les dessins annexés sont pour l'essentiel de caractère certain. Ils font donc partie intégrante de la description. Il en est de même pour les publication citées dans celle-ci. En conséquence, ces éléments pourront non seulement servir à mieux faire comprendre l'invention, mais aussi contribuer à la définition de celle-ci.

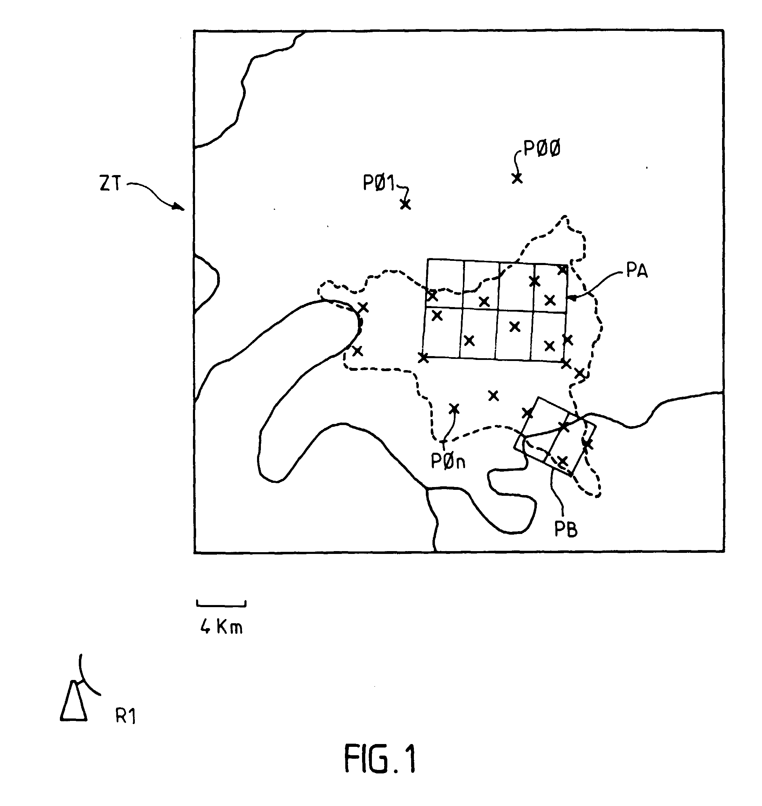

La figure 1 illustre une carte d'une zone de terrain ZT, avec des indications sommaires d'ordre géographique. La zone est observée par un radar R1, dont la position est schématisée en bas et à gauche de la figure. Les croix ("x") indiquent la position de pluviomètres (ou pluviographes) P00, P01.. P0n.

Le radar R1 est un radar météréologique (ou hydrologique), tels que les modèles:

- MELODI de la société OMERA (Argenteuil, France),
- RODIN de la société THOMSON (Paris, France),
- WRS 74C, WRS 74S, WRS 81C, WRS 81S de la société ENTERPRISE ELECTRONICS CORP.(Alabama, Etats-Unis),
- NEXRAD de la société UNISYS (Etats-Unis).

D'autres radars utilisables sont indiqués dans le Rapport du Groupe de Travail Radar de la Commission des Instruments et Méthodes d'Observation de L'Organisation Météorologique Mondiale.

On utilise de préférence un radar à impulsions, éventuellement apte à une réception sélective des échos en fonction de leur polarisation.

La longueur d'onde de travail du radar est comprise entre 5 et 10 centimètres environ, pour la plupart des applications. Le radar explore la zone qui l'entoure par balayage à une cadence de quelques minutes. Typiquement, on préfère ici que cette cadence soit par exemple d'un tour toutes les 72 secondes. La cadence des impulsions est d'environ 300 hertz, pour une durée d'impulsion d'environ 1 microseconde, ce qui correspond à une résolution d'environ 150 mètres en distance radiale (l'expression distance radiale désigne la distance d'un point du terrain au radar).

Le radar R1 observe en site bas, et avec un faisceau étroit.

Typiquement, le demi-angle d'ouverture du faisceau est de 1,2° pour le lobe principal de l'antenne, prise à 3 décibels. Une image radar est définie à l'aide d'un ou plusieurs balayages angulaires, chacun à site constant. Le site peut être:

- environ 0,6° (site bas);
- environ 1,5° (site moyen);
- environ 2,0° (site haut).

Bien entendu , la ou les valeurs du site peuvent être modifiées en fonction du relief de la zone traitée: plaine ou montagne, en particulier, ou encore de la taille de la zone de travail.

L'homme du métier sait que l'on peut ainsi obtenir une image radar dont des points élémentaires ou pixels mesurent environ 1 km x 1 km, pour des distances radiales inférieures à une centaine de kilomètres.

Bien que l'interaction du faisceau radar et des formations pluviogènes soit extrêmement complexe, on considère en général que la rétrodiffusion de l'onde radar par ces formations pluviogènes s'exprime par un facteur de réflectivité radar noté habituellement Z, qui lui-même dépend de la sixième puissance du diamètre des gouttes d'eau.

L'homme du métier en déduit, en première approximation, que la puissance rétrodiffusée $P_r$, et recouvrée dans les organes de réception du radar, est proportionnelle à ce facteur de réflectivité radar Z et à l'inverse du carré de la distance du radar à la formation pluviogène. Le coefficient de proportionnalité C est une constante caractéristique du radar et des propriétés diélectriques de l'eau. Cette constante n'est pas connue a priori avec une précision suffisante pour la mesure de pluie.

Le radar fournit donc des signaux reçus, échelonnés en fonction de sa fréquence de répétition et de son balayage angulaire, ainsi que de son site.

A partir de ces signaux reçus, on fait de préférence une conversion de coordonnées polaires (rapportées à la station radar) en coordonnées cartésiennes.

Pour la mise en oeuvre de l'invention, il est actuellement estimé nécessaire que la réflectivité Z soit exprimée sous la forme du logarithme du rapport entre la puissance rétrodiffusée et la puissance émise. Elle doit être échantillonnée sur une pluralité de (au moins 6, ou mieux 8, de préférence 12) niveaux de réflectivité, compris entre environ 25 dBZ et environ 56 dBZ. (La notation dBZ désigne l'expression en décibels du rapport précité entre la puissance réfléchie et la puissance émise).

Ainsi, à partir des données radar obtenues pour différents sites, on sait établir une image radar rapportée à des coordonnées géographiques et représentant la réflectivité radar Z des différents pixels ou points, avec la résolution précitée de 1 km x 1 km. Cette carte intéresse une couronne entourant la station radar (ou la réunion en une seule couronne de plusieurs couronnes, relatives à différents sites d'observation du faisceau radar). De cette couronne, on peut tirer ce qui concerne la zone ZT de la figure 1. Le choix du site de balayage radar est fait en fonction de la distance radiale de la zone de terrain vis à vis du radar, et du souci de minimiser le spectre d'échos de sol indésirés.

L'homme du métier sait qu'il n'est pas facile d'implanter des pluviomètres à volonté. Selon l'invention, on fait en sorte de disposer, au moins en certains points de la zone de terrain à traiter, d'un sous-réseau de pluviomètres suffisamment rapprochés pour définir une maille comprise entre 2 et 4 kilomètres. Deux tels sous-réseaux PA et PB sont visibles sur la figure 1. Les pluviomètres sont généralement implantés a priori. Il peut être nécessaire d'en ajouter quelques uns pour la mise en oeuvre de l'invention.

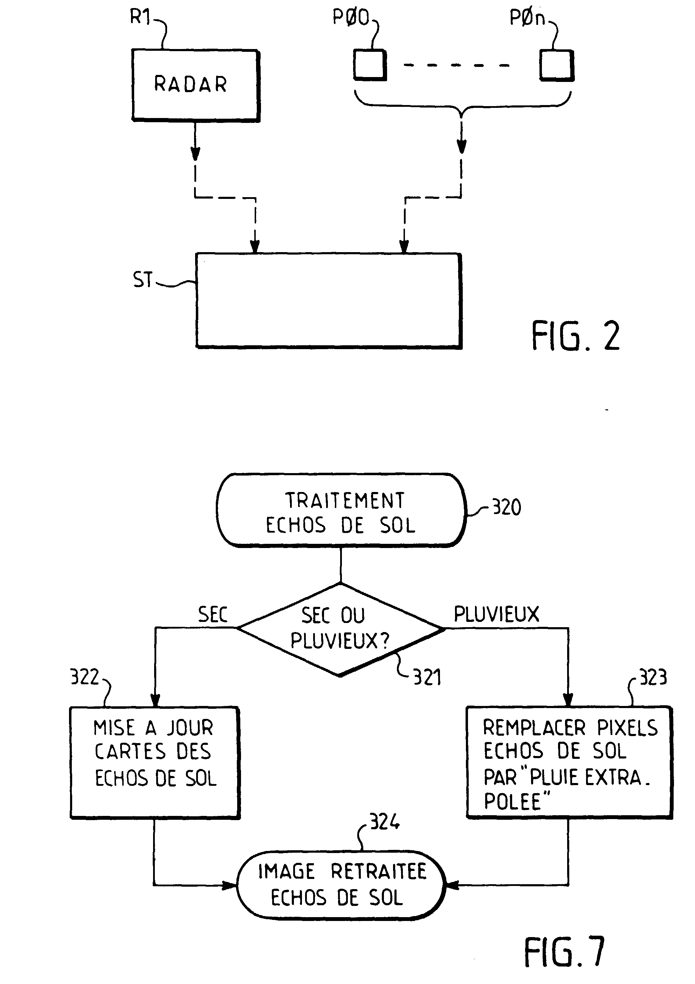

Matériellement, dans un mode de réalisation préférentiel (Figure 2), les données radar (R1), restreintes à la zone de travail ZT, et celles des pluviomètres (P00-P0n) sont transmises à une station de traitement ST, relevant d'une entité gérant les pluviomètres. On verra plus loin les problèmes relevant de cette transmission.

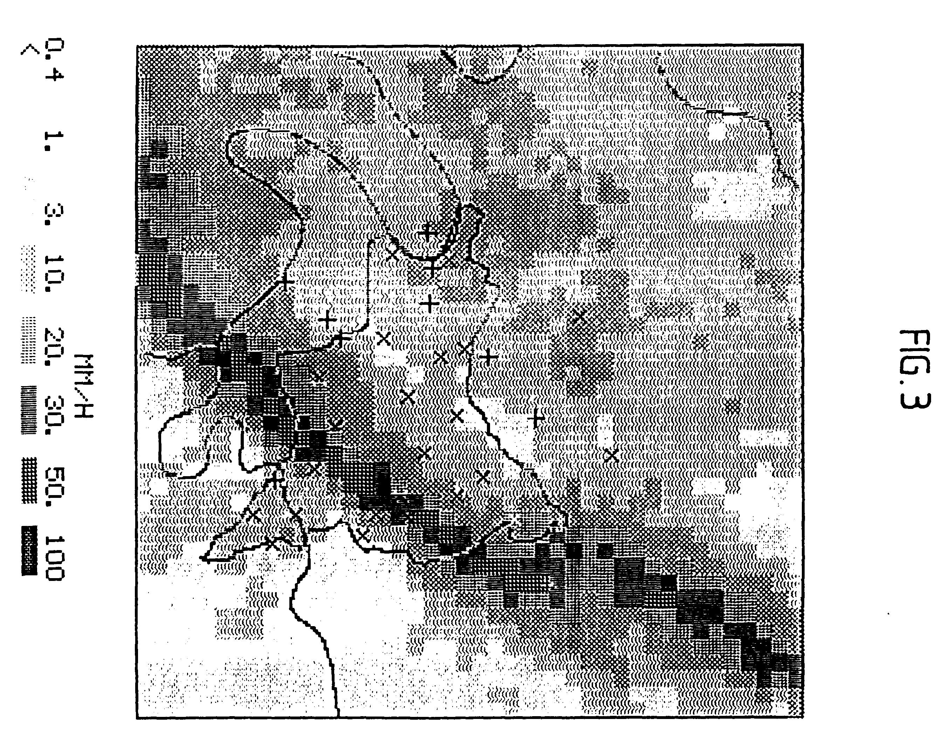

La figure 3 illustre, pour la zone de terrain ZT, une image radar originellement en 16 niveaux N0-N15, équivalents à des intensités de pluie estimées selon l'échelle suivante:

| Code | dBZ | Equivalent Pluie (mm/heure) |
|------|---------|-----------------------------|
| N0 | < 16 | < 0,4 |
| N1 | 16 − 25 | 0,4 − 1,3 |
| N2 | 25 − 30 | 1,3 − 2,7 |
| N3 | 30 − 34 | 2,7 − 4,9 |
| N4 | 34 − 38 | 4,9 − 8,7 |
| N5 | 38 − 41 | 8,7 − 13,3 |
| N6 | 41 − 43 | 13,3 − 17,8 |
| N7 | 43 − 45 | 17,8 − 23,7 |
| N8 | 45 − 47 | 23,7 − 31,6 |
| N9 | 47 − 48 | 31,6 − 36,5 |
| N10 | 48 − 50 | 36,5 − 48,6 |
| N11 | 50 − 52 | 48,6 − 64,8 |
| N12 | 52 − 53 | 64,8 − 74,9 |
| N13 | 53 − 55 | 74,9 − 100 |
| N14 | 55 − 58 | 100 − 154 |
| N15 | > 58 | > 154 |

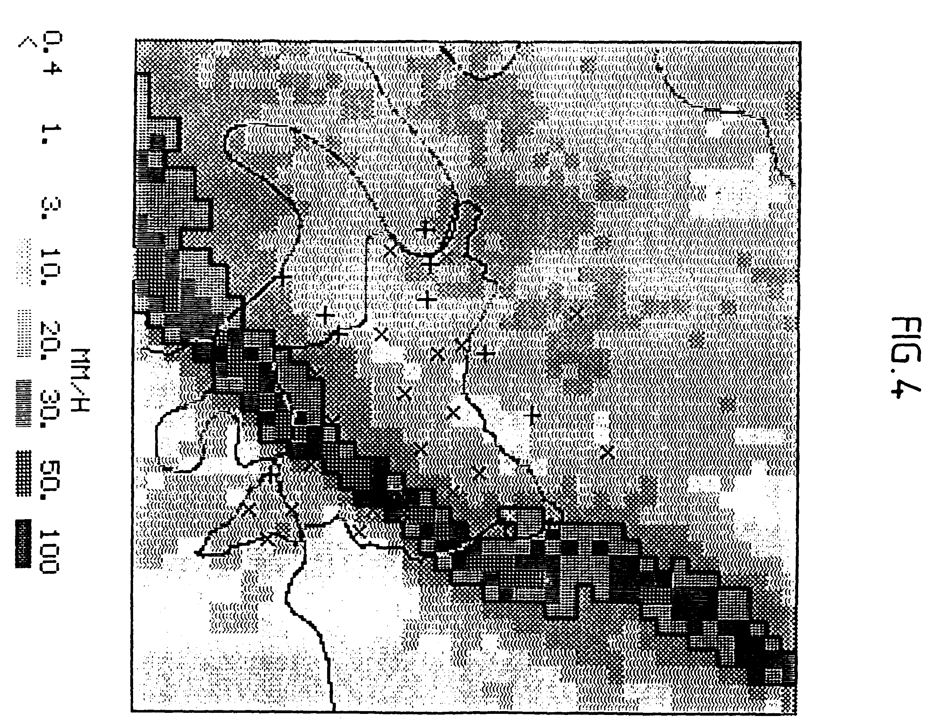

Dans ce qui précède, la "pluie équivalente" résulte d'une estimation théorique fondée sur des "caractéristiques moyennes de la pluie", telle qu'observée par radar. Pour simplifier le dessin, l'échelle de la figure 3 (indiquée en valeurs arrondies, et commune avec les figures 4, 5 et 10) regroupe en un seul les niveaux N3 et N4, N5 et N6, N7 et N8, ainsi que N9 et N10. (Il en est de même pour les niveaux N11 à N13 ainsi que N14 et N15, mais ceux-ci ne sont pas utilisés dans l'image fournie, non plus que le niveau N0).

Malgré les regroupements de niveaux effectués, le dessin fait bien apparaître la grande complexité des informations de pluie, telles que fournies par le radar.

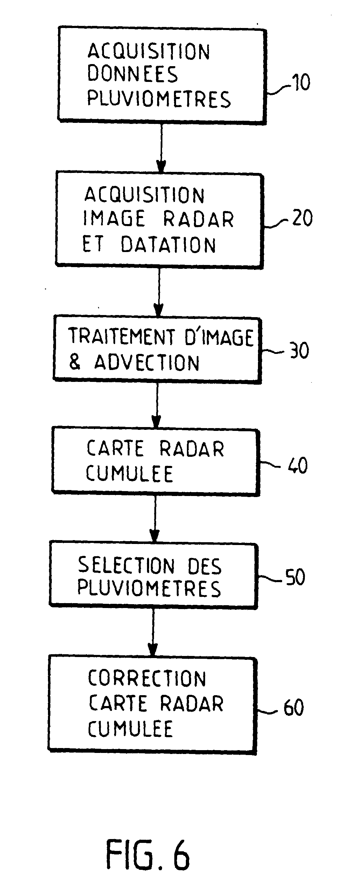

Il est maintenant fait référence à la figure 6.

L'étape 10 consiste à acquérir les données issues des pluviomètres, transmises à la station de traitement ST. Les pluviomètres étant synchrones à 1 minute près, et opérant sur un temps bien défini, ici 5 minutes, ces données sont datées avec précision ("dater" se réfère ici à la date et à l'heure, cette dernière étant précise à la seconde près).

L'étape 20 consiste à acquérir une image issue du radar, et transmise à la station de traitement ST. Sa datation est plus délicate. En effet, en règle générale, la date de l'image radar est donnée par l'instant de leur début de transmission (ou du début du balayage radar, l'écart entre les deux étant en principe constant). Mais le balayage radar démarre dans une direction qui est pratiquement aléatoire par rapport au début de l'entrée du faisceau dans la zone de terrain traitée; il en résulte une incertitude de 0/1 minute, si la période de balayage est de 72 secondes. On verra plus loin comment la traiter.

L'étape 30 consiste en un traitement de l'image radar, avec "advection", c'est à dire prise en compte des mouvements des cellules pluviogènes (appelées aussi "échos").

La première opération est une correction d'image. En effet, la Demanderesse a observé que la transmission des images radar (au moins lorsqu'elle s'effectue en temps réel) peut être sujette à des erreurs qu'il convient de corriger soigneusement. Ce problème est d'autant plus aigu que les données météorologiques sont particulièrement importantes pendant les orages et que les orages sont par nature susceptibles d'augmenter le taux d'erreur de transmission par ligne de communication ou, pis encore, par radio. Ainsi, l'invention prévoit un filtrage des erreurs de transmission, effectué à partir d'analyses d'éventuelles ruptures de continuité entre des images consécutives. L'image cause d'une telle rupture est rejetée. Un test est également effectué pour la continuité entre lignes d'une même image, avec également rejet d'une ligne manifestant une discontinuité importante. En outre, une image dans laquelle plus de 30 lignes ont été rejetées sera globalement rejetée (l'image comporte en tout 256 lignes). On obtient donc ainsi, au niveau de la station de traitement, une image propre à être traitée.

Pour la mise en oeuvre de l'invention, il est avantageux, mais non impératif, d'effectuer préalablement ce que l'on appellera un "traitement des échos de sol".

L'homme du métier sait que les radars sont sujets à un écho de sol, d'une amplitude assez importante, et qui est dû à la rétrodiffusion des signaux radar par le sol. Compte tenu des sites de faisceau radar bas, utilisés dans les radars météorologiques, ces échos de sol peuvent se trouver dans l'image, avec un niveau assez important, alors qu'ils ne correspondent pas du tout à de la pluie.

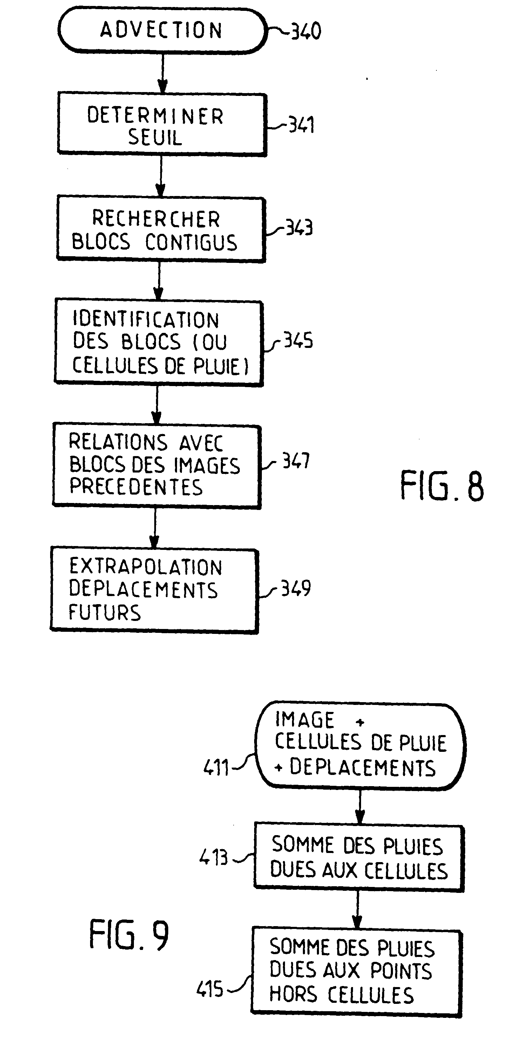

Le mécanisme de traitement des échos de sol est illustré sur la figure 7 et sera maintenant décrit.

Après l'étape d'entrée 320, un test 321 détermine si l'image correspond globalement à un temps sec ou pluvieux. Ceci peut se faire de différentes manières, à partir des critères suivants :

- on recherche sur l'ensemble de l'image le nombre de pixels correspondants à un temps pluvieux. Le critère peut être par exemple le dépassement d'un seuil. Si la proportion de pixels sur l'ensemble de l'image est inférieure à un seuil de 3% (par exemple), l'image est considérée comme une image de temps sec, dont tous les pixels de niveau élevé correspondront à des échos de sol.

- On décrira ci-après un moyen permettant de déterminer les déplacements des formations pluviogènes d'une image à l'autre. Il peut être également très intéressant de considérer comme une image de temps sec toute image dépassant le seuil précité de 3%, mais possédant, par rapport à l'image précédente, de petits déplacements "browniens" (non corrélés entre eux) de valeur moyenne sensiblement nulle. Ceci repose sur l'observation que des cellules pluviogènes à petits déplacements représentent soit du beau temps (petits déplacements "browniens"), soit au contraire des orages en marais barométrique (petits déplacements structurés), susceptibles d'engendrer d'importantes précipitations.

- Bien entendu, des combinaisons des deux critères précédents, éventuellement avec d'autres critères, peuvent être utilisés pour discriminer une image de temps sec d'une image de temps pluvieux.

En cas de temps sec, l'étape 322 consiste à mettre à jour une carte des échos de sol, qui comprend au moins la zone examinée. Cette carte peut être initialisée au départ à partir d'un temps reconnu comme sec. Par la suite, il suffit d'y effectuer des mises à jour. Bien entendu, les échos de sol ont des caractéristiques générales fixes, et ne varient pratiquement pas d'une image à l'autre. Ils varient cependant, en intensité, à une échelle temporelle plus longue, pour différentes raisons.

Lorsque l'image correspond au contraire à un temps pluvieux, on va (323) effacer de celle-ci les pixels appartenant à la carte des échos de sol, telle qu'elle existe au même moment. Et ces pixels vont être remplacés par de la "pluie extrapolée", pour fournir l'image retraitée (324). Là aussi intervient le fait qu'on aura déterminé les déplacements des formations pluviogènes. Cette "pluie extrapolée" consiste à remplacer les pixels d'échos de sol par ce que l'on devrait attendre au même point compte tenu du déplacement déterminé pour le formations pluviogènes obtenues dans l'image précédente ou dans plusieurs images précédentes. Cette caractéristique est particulièrement importante en zone urbaine, où il existe de nombreux obstacles ponctuels, souvent d'assez grande hauteur, et susceptibles de perturber gravement la validité des mesures.

La suite du traitement consiste à rechercher dans l'image les cellules pluviogènes principales. On peut utiliser à cet effet différents types de traitements globaux de l'image. Un moyen simple consiste à prendre un seuil relié par exemple au niveau moyen de l'image (ou à tout autre traitement statistique de celle-ci).

La figure 4 résulte de l'application d'un seuil à l'image de la figure 3. Ici, on ne retient que les pixels de niveau au moins égal à 5. Ils sont placés dans le domaine compris entre les deux lignes épaisses de la figure 4. Dans ce domaine se trouvent la ou les cellules pluviogènes principales.

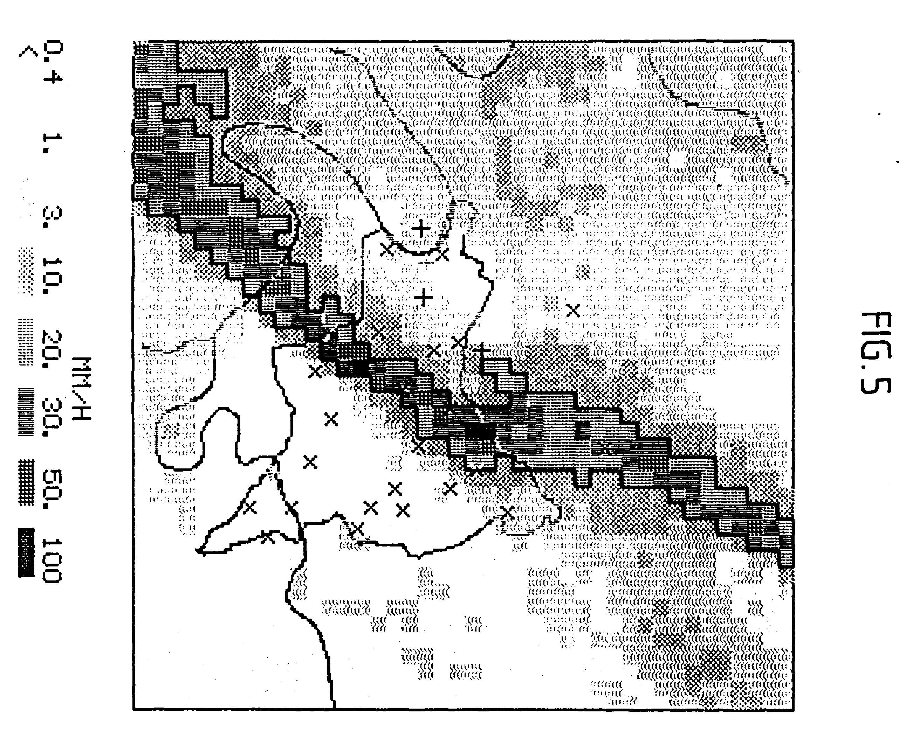

La figure 5 résulte du même traitement, mais pour une image antérieure de cinq minutes à celle de la figure 3.

Ainsi se trouvent réunis les éléments de départ pour la prise en compte du mouvement des cellules pluviogènes, d'une image radar à une autre.

Il est maintenant fait référence à la figure 8, qui illustre ce traitement, souvent appelé "advection" par les hommes du métier. (Le mot "advection" est repris ici; il doit cependant être entendu qu'il peut couvrir des traitements très différents suivant les auteurs).

Après l'étape de début 340, la première étape 341 du traitement consiste à déterminer un seuil d'analyse sur l'ensemble des points d'une image, comme déjà décrit. L'image comporte au départ 256 x 256 pixels. Le seuil est fixé de sorte qu'on retienne seulement quelques milliers de pixels de l'image, par exemple entre 1500 et 5000 pixels de l'image.

L'étape 343 consiste alors à rechercher, dans l'image ainsi "seuillée", des blocs de pixels contigus que l'on va appeler cellules pluviogènes. Dans cette recherche de blocs, on élimine les pixels isolés, ou ceux que l'on peut repérer comme correspondant à des artefacts. A cet effet, il est possible d'utiliser une analyse de la forme des blocs, notamment pour en éliminer les points isolés ou erratiques. On prévoit aussi qu'un bloc doit comporter un nombre minimum de pixels, par exemple 16.

Plus généralement, l'identification et la reconnaissance de forme des blocs peuvent être effectuées de la manière décrite dans la thèse de Doctorat "INTRODUCTION D'OUTILS DE L'INTELLIGENCE ARTIFICIELLE DANS LA PRÉVISION DE PLUIE PAR RADAR", soutenue par Andreas NEUMANN le 13 décembre 1991 à l'Ecole Nationale des Ponts et Chaussées, PARIS. Le contenu descriptif de cette thèse est incorporé à la présente description, à toutes fins utiles.

On y considère un écho (une cellule pluviogène) de l'image en cours, un couple d'échos (d'une image à l'autre), et une séquence d'échos (la même cellule pluviogène, sur une suite d'images précédentes consécutives), et bien entendu l'image en cours elle-même.

Pour un écho, sont utilisés tout ou partie des paramètres suivants:

- la taille ou surface de l'écho ($km^2$),
- la masse ou flux pluvial de l'écho ($m^3$/heure)
- les intensités moyenne et maximale de l'écho (mm/h)
- la variance de l'intensité de l'écho,
- les coordonnées du barycentre de l'écho,
- les inerties minimale et maximale de l'écho, ainsi que son angle d'inertie maximale,
- la dispersion de l'écho (différence entre inertie maximale et minimale, rapportée au carré de sa taille),
- l'élongation de l'écho (différence entre inertie maximale et minimale, rapportée à leur somme).

Pour un couple d'échos, sont utilisés les paramètres suivants:

- vitesse de déplacement correspondant à la distance des deux barycentres,
- direction de déplacement correspondant aux deux barycentres.

Pour une séquence d'échos, sont utilisés tout ou partie des paramètres suivants:

- vitesse moyenne et direction moyenne de déplacement de l'écho sur l'ensemble des images de la séquence,
- moyenne de variation relative de la taille et de la masse de l'écho entre le début de la séquence et la dernière image de celle-ci, (par exemple des variations relatives sont calculées entre la dernière image de la séquence et les images du début de la séquence, les trois dernières exclues, et l'on fait la moyenne de ces variations relatives),
- changement moyen de l'élongation entre le début de la séquence et la dernière image de celle-ci, (par exemple des changements d'élongation sont calculés entre la dernière image de la séquence et les images du début de la séquence, les trois dernières exclues, et l'on fait la moyenne de ces valeurs de changement d'élongation).

Pour une image, sont utilisés les paramètres suivants:

- moyenne des vitesses moyennes de toutes les séquences d'échos définies,
- moyenne des directions moyennes de toutes les séquences d'échos définies.

Des éléments plus détaillés se trouvent dans l'annexe A1 ("Définition des attributs du contexte") de ladite thèse. Le calcul des paramètres relève de l'étape 345.

L'arbre de décision de la figure IV-9 de la thèse permet alors de résoudre tous les cas d'identification de cellules pluviogènes (ou blocs de pixels, ou échos), avec rapprochement historique vis-à-vis des images antérieures (étape 347). A la base, cette étape 347 peut être considérée comme un rapprochement des tables de paramètres de blocs obtenues pour une ou des images précédentes et pour l'image en cours.

Cependant, il doit être tenu compte du fait que les cellules pluviogènes peuvent se fondre les unes les autres, ou au contraire se séparer, apparaître, disparaître, entre autres. L'établissement d'une relation avec les blocs des images précédentes est donc une opération complexe. En pratique, cette opération se fait à partir d'un ordre hiérarchique des blocs de l'image précédente, et d'un arbre de décision faisant intervenir les seuils appliqués aux images, les caractéristiques de formes des blocs (qui comprennent leurs centres), et leurs caractéristiques de vitesse, comme déjà décrit en détail.

Ceci effectué, l'étape 349 consiste à extrapoler les déplacements futurs des blocs qui viennent d'être traités pour l'image en cours. Cette extrapolation est importante notamment pour simplifier l'étape 345. En effet, on ne va pas comparer directement les blocs ou cellules pluviogènes de l'image en cours avec ceux de l'image précédente. On comparera les blocs ou cellules pluviogènes de l'image en cours avec l'extrapolation des déplacements futurs, compte tenu de la période entre images, que l'on avait précédemment établie avec les blocs de l'image précédente.

Il est raisonnablement possible de conduire les opérations de relations entre blocs en comparant uniquement l'image précédente à l'image en cours. Par contre, en ce qui concerne l'extrapolation, il est préférable de conduire celle-ci sur une cascade de tables antérieures, couvrant par exemple cinq états successifs obtenus à partir du radar pour les blocs ou cellules pluviogènes intéressant la zone de terrain concernée.

On dispose ainsi d'une "poursuite" des cellules pluviogènes, rapportée aux dates des images radar.

A partir de là, on va construire une carte de pluviométrie estimée relative à la zone de terrain ZT. Cette carte représentant la somme de la pluie reçue en chaque point sur un intervalle de temps choisi ("second intervalle de temps"). La définition des points ou pixels reste la même, c'est-à-dire que chacun couvre environ une surface de 1 km x 1 km.

Cette carte diffère profondément des images radar:

- une image radar est un échantillonnage des cellules pluviogènes à un instant donné (non précisément connu). La période entre deux images est de 5 minutes environ.
- la carte est une estimation de l'intensité de la pluie reçue au sol, en tous points, pendant un intervalle de temps bien défini.

Le processus préféré pour établir la carte est illustré sur la figure 9.

L'étape 411 rappelle que l'on dispose d'une image en cours, d'une image précédente, et d'une description historique des cellules pluviogènes contenues dans ces images, avec leur déplacement.

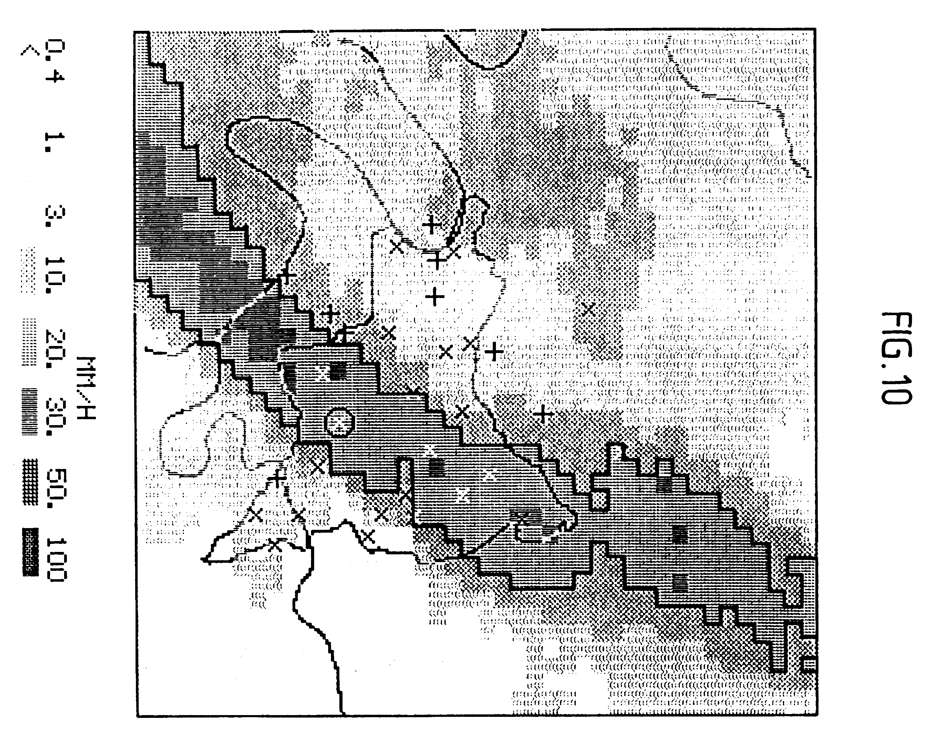

Par interpolation, on déduit le mouvement de chaque cellule pluviogène pendant l'intervalle de temps séparant l'image précédente (figure 5) et l'image en cours (figure 4). Le résultat est illustré sur la figure 10, qui montre un élargissement de la bande de pluie intense (entre les traits épais). Des flèches schématisent les vecteurs vitesses de déplacement en certains points. Cette figure 10 montre donc, à des fins purement illustratives, l'effet moyen des cellules pluviogènes sur l'intervalle de temps entre les images des figures 5 et 4.

L'étape 413 consiste à faire la somme en chaque pixel des pluies dues aux cellules pluviogènes principales, compte tenu de leur déplacement individuel. L'étape 415 consiste à faire, en chaque pixel-carte, la somme des pluies dues aux pixels radar situés hors des cellules pluviogènes principales, s'il en existe (de significatifs). Ces points sont ceux qui ont été considérés comme inférieurs au seuil à l'étape 341. Pour tous ces points, on admet un déplacement égal au déplacement moyen de l'ensemble des cellules pluviogènes pour toute l'image. Bien entendu, à l'étape 415, on peut éliminer les niveaux très bas, qui causeraient des précipitations négligeables.

Le temps pendant lequel on réalise la sommation va en principe correspondre à la périodicité de cumul des pluviomètres installés au sol, ici 5 minutes. C'est de préférence un multiple de cette durée, inférieur à environ 30 minutes (la durée de vie moyenne des cellules pluviogènes est 20 minutes). On considère un intervalle de temps de 15 minutes.

Si, dans cet intervalle de 15 minutes, on a obtenu une autre image radar, on lui fera subir le même traitement que précédemment. Et l'on réalise la moyenne arithmétique entre cette image nouvelle et la précédente.

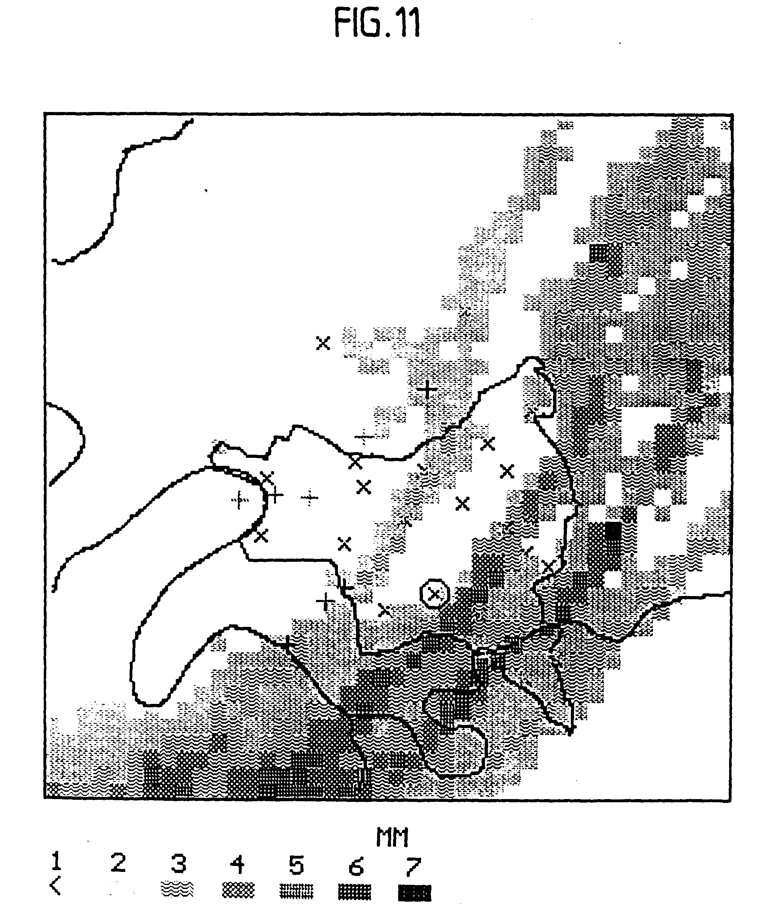

L'effet des différentes étapes de la mise en oeuvre de l'invention est illustré sur les figures 11 à 14.

La figure 11 illustre un cumul de pluie sur un quart d'heure. Cette carte est obtenue sans advection et sans calibration, c'est-à-dire sans prendre en compte le déplacement des cellules pluviogènes. On y voit apparaître de façon tout à fait manifeste la présence artificielle de pointes et de creux, dus à l'écart temporel entre les images ou échantillons obtenus par le radar pour les formations pluviogènes.

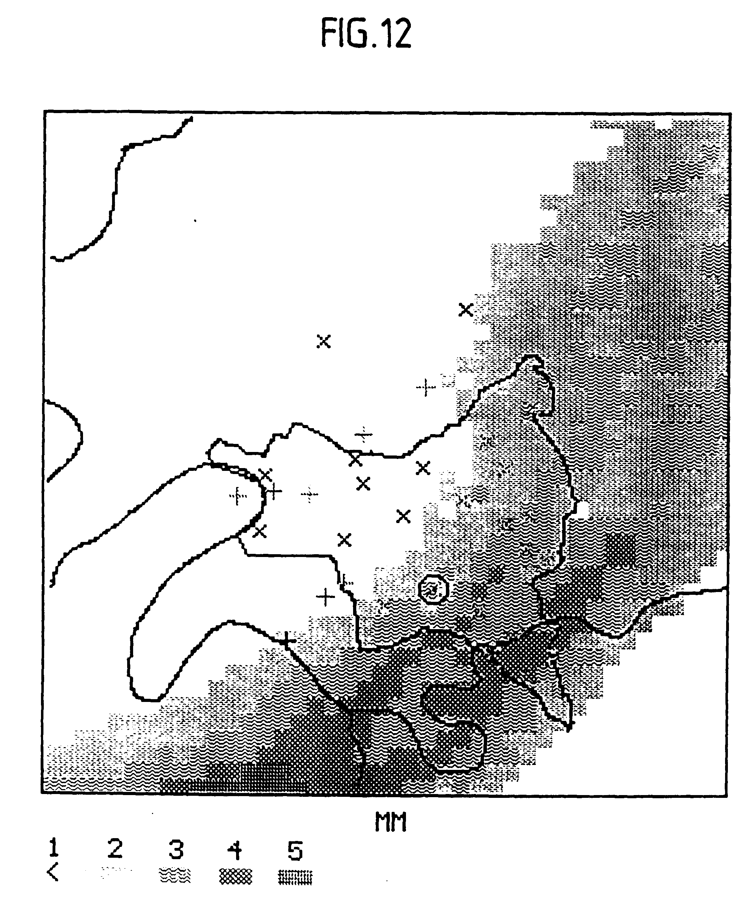

La carte de la figure 12 tient compte du mouvement des cellules pluviogènes sur la même période d'un quart d'heure. L'examen montre immédiatement que cette carte est beaucoup plus nette, en ce sens qu'elle n'a pratiquement plus de discontinuité.

On s'intéressera maintenant à la suite des opérations, qui concernent la calibration des cartes pluviométriques radar à partir de données pluviométriques réelles tirées des capteurs ou pluviomètres.

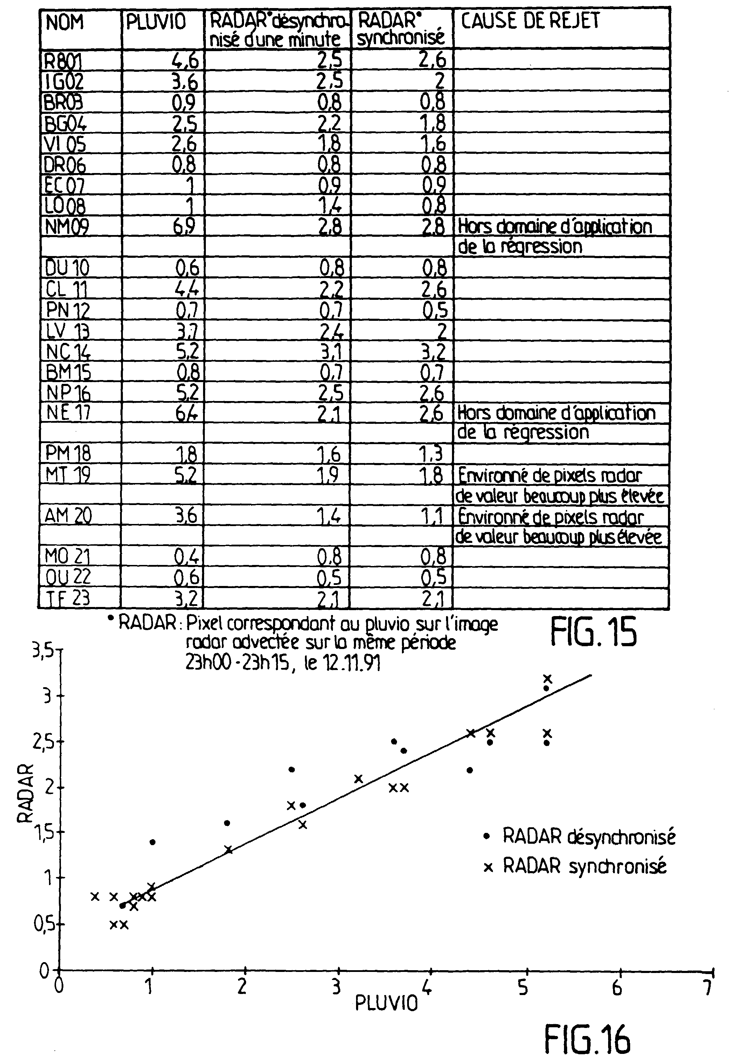

On réalise donc une table, dont un exemple est donné sur la figure 15. En regard d'une identification des pluviomètres, cette table comprend:

- le cumul réel du pluviomètre sur 15 minutes,

- la valeur brute de la carte radar pour le pixel du pluviomètre,
- une valeur "resynchronisée" de la carte radar pour le pixel du pluviomètre, et
- une cause de rejet éventuel de ce pluviomètre.

Comme déjà indiqué, on se restreint à un sous-ensemble de pluviomètres définissant au moins un sous-réseau ayant une maille comprise entre 2 et 4 km. La Demanderesse a en effet remarqué qu'un tel sous-réseau permet de voir passer à coup sûr pratiquement toutes les cellules pluviogènes significatives qui le traversent, et dont les caractéristiques moyennes sont: taille 4 km x 4 km, vitesse 40 km/h, durée de vie 20 minutes.

Les pluviomètres doivent tout d'abord donc être synchronisés entre eux. En outre, il est souvent souhaitable d'effectuer une resynchronisation des données issues du radar, pour tenir compte:

- de l'incertitude sur la datation (jour, heure, minutes) des images radar utilisées,
- du temps mis par les gouttes de pluie pour rejoindre le sol, à une vitesse moyenne que l'on peut fixer de 6 à 9 mètres par seconde,
- mieux, on peut tenir compte des altitudes estimées des formations pluviogènes de la carte, connaissant le site de balayage du radar et la distance radiale de ces formations pluviogènes au radar.

La resynchronisation de la carte radar consiste à décaler (relativement) la référence temporelle (imprécise) des images radar par rapport à la référence temporelle (précise) des pluviomètres, compte-tenu des remarques ci-dessus.

La présente invention prévoit en outre qu'une mesure peut être rejetée dans les différents cas suivants:

- lorsque les données radar pour le pixel où se trouve le pluviomètre sont entourées d'autres pixels possédant une valeur beaucoup plus élevée (plus généralement lorsque l'image cumulée de pluie issue du radar présente un fort gradient dans la zone où se trouve le pluviomètre),
- lorsqu'il s'agit de valeurs erratiques, qui se situent par exemple hors de l'intervalle de confiance à 95% d'une régression linéaire.

La figure 16 représente les données issues du radar en millimètres d'eau, et en verticale, en fonction des données issues du pluviomètre, en horizontale.

Les points marqués d'un cercle sont ceux valables pour le radar non synchronisé; les points marqués du symbole de multiplication X sont valables pour le radar resynchronisé.

Il apparaît immédiatement à l'examen de la figure 16 que la resynchronisation du radar améliore considérablement les effets de la régression linéaire.

La calibration a pour but:

- de pallier les défauts d'étalonnage électronique du radar: par exemple, une variation de température de quelques degrés introduit une distorsion de la réponse de l'amplificateur logarithmique qui fournit le niveau en dBZ,
- de donner précisément les paramètres de la relation

$$Z = A \cdot R^b$$

entre la mesure Z de la réflectivité radar en dBZ et l'estimation R de l'intensité pluviométrique correspondante. Les paramètres A et b ont des ordres de grandeur connus, qui dépendent du type de formations pluviogènes en présence desquelles on se trouve (par exemple, des valeurs théoriques proposées sont A = 200 et b = 1,6 pour une pluie stratiforme-"stratiform rainfall"- , contre A = 486 et b = 1, 37 pour une pluie convective - "convective rainfall"). En fait, ces valeurs sont variables, même au cours d'un événement pluviogène donné.

Le défaut d'étalonnage électronique le plus fréquent est la dérive du zéro de l'échelle radar en dBZ, qui se répercute sur la totalité de l'échelle de mesure. D'une image à l'autre, ce défaut peut être repéré à cause de la modification de la loi de distribution statistique des niveaux sur l'image. Plus généralement, si ce défaut perdure sur une longue période, il va englober ainsi plusieurs pluies; en ce cas, on observe une distorsion entre la distribution des mesures radar et celle des mesures pluviométriques réelles (réparties en classes de niveaux semblables aux mesures radars); et cette distorsion est la même sur des périodes indépendantes de cumul des pluviomètres installés au sol.

On commence de préférence par corriger cette dérive, bien qu'il soit envisageable de ne pas faire cette correction, au moins dans certains cas. La calibration consiste donc dans un premier temps à compenser la dérive du zéro électronique si elle est observée sur une longue durée ou si elle est observée d'une image sur l'autre, en rajoutant cette dérive aux mesures radar.

Le paramètre A varie principalement en fonction de la taille des gouttes, qui est elle-même très variable dans le temps au cours de la pluie générée par une même cellule pluviogène (depuis les grosses gouttes produites à la constitution de la cellule, jusqu'aux fines gouttes au moment de sa disparition). Ainsi la calibration s'appliquera à suivre le facteur A moyen sur cette cellule pluviogène, sur toute sa durée de vie.

Il est particulièrement important d'effectuer une comparaison sur un réseau comprenant des sous-réseaux de 2 à 4 km de maille, assurant l'identification de ce facteur moyen sur toute la durée de vie d'une cellule ou sur une partie appréciable de cette durée de vie.

La comparaison la plus simple est une régression linéaire (figures 15 et 16). Le facteur de calibration sera alors, par exemple :

- soit la valeur observée de la pente de la droite de régression,
- soit la valeur moyenne par laquelle passe la droite de régression,
- soit une valeur lissée sur plusieurs pas de temps des valeurs ci-dessus.

L'application de ce facteur de calibration s'effectue pour le pas de temps où il a été calculé :

- soit sur toute la zone de terrain si elle est de taille suffisamment limitée pour n'être pas touchée par des cellules pluviogènes très différentes au même instant,
- soit, dans le cas contraire, sur une partie de la zone de terrain avoisinant le sous-réseau utilisé pour la calibration.

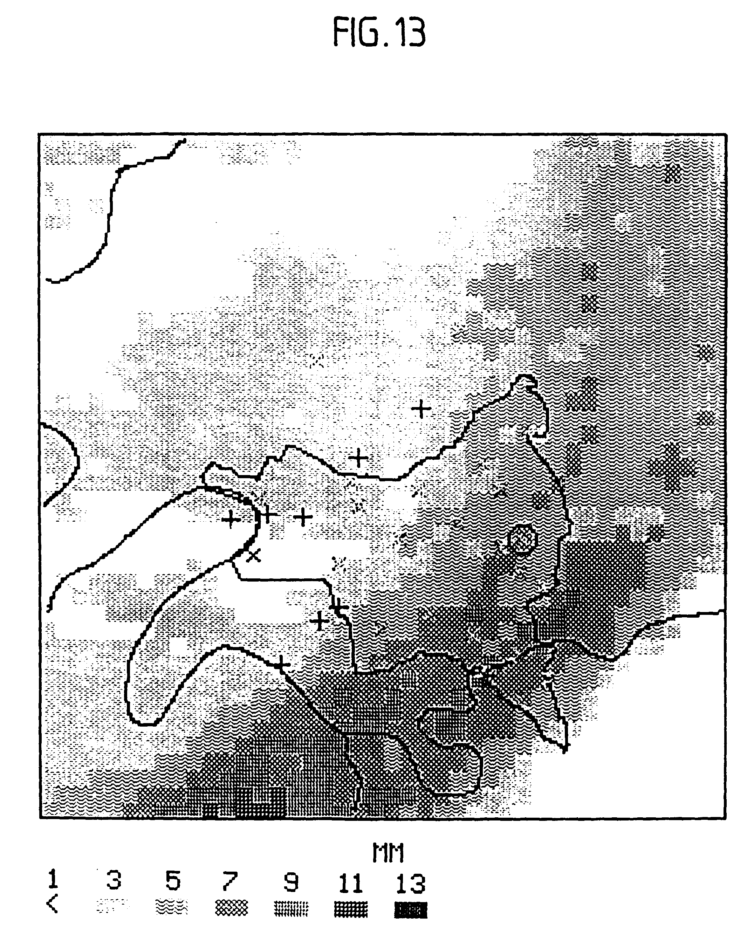

La figure 13 montre une carte obtenue à partir des mêmes données que la figure 12, mais après calibration du cumul de pluie par rapport à un réseau de pluviographes, conformément à la présente invention. Les différences très importantes existant entre les figures 12 et 13 montrent l'apport majeur de la présente invention en la matière.

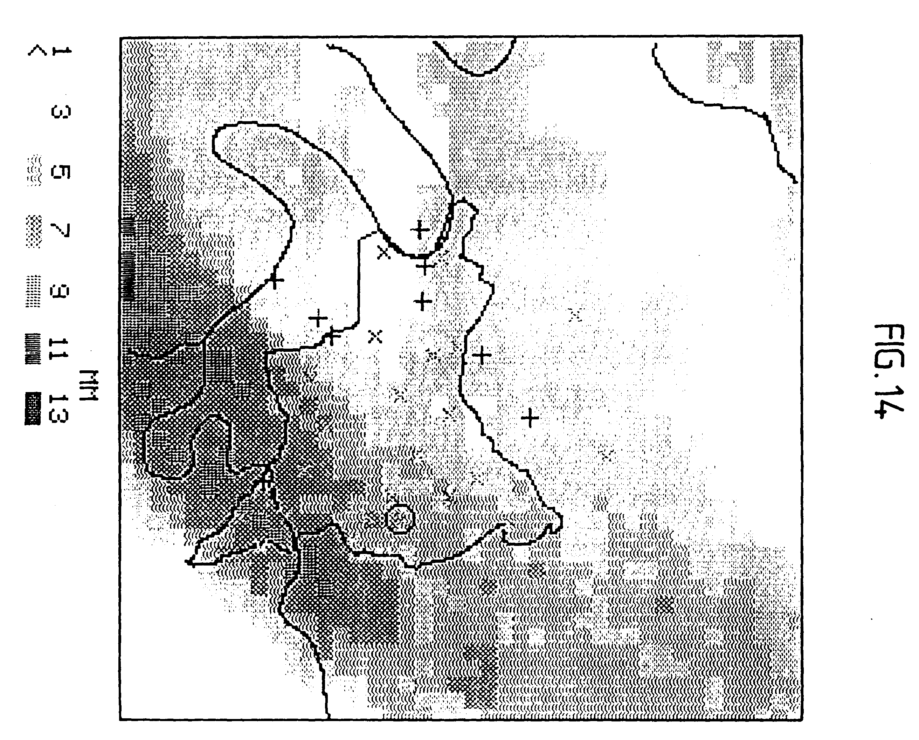

Pour être encore plus précis, on resynchronise les données radar en les retardant d'une minute. On obtient alors la carte de la figure 14, qui reflète d'encore plus près les données de pluie cumulées que l'on vise à obtenir.

Les mesures des pluviomètres non utilisés dans des sous-réseaux peuvent servir, par comparaison aux données de la carte définitive, à valider celle-ci.

**Revendications**

1.  Procédé pour l'évaluation des précipitations sur une zone de terrain, du type comprenant les étapes suivantes :

    a) on dispose, dans la zone de terrain (ZT), des pluviomètres automatiques (P00-P0n), aptes à fournir des données datées de pluviométrie locale,
    b) on prévoit un radar météorologique (R1), apte à fournir, avec une périodicité radar donnée, une image radar représentative de cellules pluviogènes sur un espace de travail radar qui englobe la zone de terrain, et décomposable en pixels échantillonnés sur une pluralité de niveaux de réflectivité,
    c) à l'intérieur de la zone de terrain (ZT), on analyse (30) la suite des images radar afin, d'une part, de poursuivre dynamiquement les cellules pluviogènes, en leur forme et leur mouvement, et d'autre part, d'établir (40) une carte pluviométrique radar,

    caractérisé en ce qu'à l'étape a), d'une part, les pluviomètres sont synchrones à la minute près environ, et d'autre part, les données datées de pluviométrie sont des données cumulées sur un premier intervalle de temps choisi,

    en ce qu'à l'étape c) on établit (40) la carte pluviométrique radar par cumul en chaque pixel de ladite zone de terrain, de données de précipitations mesurées, pendant un second intervalle de temps choisi, dans des cellules pluviogènes principales déterminées, sur un critère de seuil, parmi les cellules pluviogènes, avec interpolation des formes et positions des cellules pluviogènes principales pendant ce second intervalle de temps, et en ce que l'on prévoit en outre les étapes :

    d) dans laquelle on sélectionne (50), parmi les pluviomètres, au moins un sous-réseau (PA, PB) d'au moins quatre pluvio-mètres, écartés d'environ 2 à 4 kilomètres les uns des autres et touchés par au moins une cellule pluviogène principale, et
    e) on corrige (60) au moins partiellement la carte pluvio-métrique radar en fonction de la relation entre les données cumulées de pluviométrie des pluviomètres du sous-réseau et les données cumulées de précipitations formant la carte aux emplacements des pluviomètres du sous-réseau, compte-tenu du rapport entre les premier et second intervalles de temps,

ce qui permet une excellente estimation des précipitations en chaque kilomètre carré de la zone de terrain.

**2.** Procédé selon la revendication 1, caractérisé en ce que la périodicité radar est au plus égale à 6 minutes environ, en ce que la durée du premier intervalle de temps est au plus égale à 6 minutes environ, et en ce que la durée du second intervalle de temps est au plus égale à 30 minutes environ.

**3.** Procédé selon l'une des revendications 1 et 2, caractérisé en ce que l'opération c) comprend, avant l'analyse, une opération c1) de traitement d'échos de sol, comportant:

- c11) une préanalyse globale (321) de l'image radar pour déterminer si elle concerne un temps sec ou pluvieux,
- c12) la mise à jour (322) d'une carte d'échos de sol radar s'il s'agit de temps sec, et
- c13) s'il s'agit de temps pluvieux, le remplacement (323) des points appartenant à la carte d'échos de sol radar par des pixels extrapolés d'images précédentes.

**4.** Procédé selon la revendication 3, caractérisé en ce que l'opération c) comprend :

- c2) la recherche dans l'image en cours de cellules pluviogènes principales (345), sous forme de blocs de pixels (343) satisfaisant une condition choisie de niveau (341), avec rapprochement de ces cellules pluviogènes principales avec celles issues d'images précédentes (347), pour la poursuite dynamique de leur forme et de leur mouvement,
- c3) la détermination d'un mouvement moyen des pixels extérieurs aux cellules pluviogènes dans l'image en cours, par rapport à au moins une image précédente,
- c4) l'estimation (413) des précipitations cumulées dues aux cellules pluviogènes principales en fonction des niveaux de leurs pixels interpolés compte-tenu de la vitesse propre de chaque cellule, et
- c5) l'estimation (415) des précipitations cumulées dues aux pixels situés hors des cellules pluviogènes, en fonction de leur niveau compte-tenu de leur mouvement moyen.

**5.** Procédé selon la revendication 4, caractérisé en ce que l'étape c2) de l'opération c) comprend :

- c21) la sélection (341) d'un nombre restreint de pixels de l'image, comme présentant un niveau important dans l'ensemble de cette image,
- c22) la recherche (343) de blocs de pixels contigus parmi les pixels ainsi sélectionnés, avec identification de forme de ces blocs, et élimination de blocs erratiques,
- c23) la constitution (345) d'une nouvelle liste de cellules pluviogènes à partir de ces blocs, de leur données de forme,
- c24) le rapprochement (347) des cellules de cette nouvelle liste avec les cellules d'au moins une liste précédente, avec affectation d'une vitesse à chaque cellule, et
- c25) l'estimation (349) du déplacement futur de chaque cellule pluviogène.

**6.** Procédé selon l'une des revendications précédentes, caractérisé en ce qu'à l'opération c), l'interpolation des formes et positions des pixels de l'image pendant le second intervalle de temps comprend une resynchronisation temporelle des pixels radar, compte-tenu du temps moyen mis par la pluie pour rejoindre le sol, ce temps étant relié à l'altitude moyenne de valeur desdits pixels, laquelle est à son tour reliée à la distance radiale de la zone de terrain par rapport au radar et au site radar avec lequel cette zone de terrain a été observée.

**7.** Procédé selon l'une des revendications précédentes, caractérisé en ce que l'opération e) comprend :

- e1) le cumul sur le second intervalle de temps des données pluviométriques réelles individuelles des pluviomètres du ou des sous-réseaux sélectionnés,
- e2) la mise en oeuvre d'un rapprochement statistique entre les données de pluviométrie réelle ainsi cumulées, et les données de pluviométrie estimée correspondantes dans la carte pluviométrique, et
- e3) la correction de points de la carte pluviométrique en fonction du résultat de ce rapprochement statistique.

**8.** Procédé selon la revendication 7, caractérisé en ce que le rapprochement statistique est une régression linéaire.

**9.** Procédé selon l'une des revendications précédentes, caractérisé en ce que l'opération e) comprend en outre le contrôle de la correspondance entre les données de pluviométrie réelle de certains au moins des pluviomètres n'appartenant pas aux sous-réseaux et les données de pluviométrie correspondantes dans la carte corrigée.

10. Procédé selon l'une des revendications précédentes, caractérisé en ce que l'opération a) comprend la transmission des données pluviométriques réelles à une station de traitement, relevant d'une entité gérant les pluviomètres, en ce que l'opération b) comprend la transmission des données d'image radar intéressant la zone de terrain à cette station de traitement,

en ce que les opérations c) à e) sont conduites en cette station de traitement, et
en ce que l'opération c) comprend le contrôle des images radar reçues, en particulier par comparaison entre images consécutives.

11. Procédé selon l'une des revendications précédentes, caractérisé en ce que les pixels de l'image radar sont échantillonnés sur une pluralité de niveaux de réflectivité, compris entre environ 25 dBZ et environ 56 dBZ.

**Patentansprüche**

1. Verfahren zum Ermitteln von Niederschlägen auf einem Bodenbereich, umfassend die folgenden Schritte:

a) Anordnen von automatischen Niederschlagsmessern (P00-P0n) in dem Bodenbereich (ZT), die dazu ausgelegt sind, datierte Daten zur lokalen Niederschlagsmessung zu liefern,
b) Bereitstellen eines meteorologischen Radars (R1), das dazu ausgelegt ist, mit einer gegebenen Radar-Periodizität ein Radar-Bild zu liefern, das für Niederschlagszellen in einem Radar-Arbeitsraum repräsentativ ist, der den Bodenbereich umgibt und in Probenahme-Pixel in einer Mehrzahl von Niveaus des Reflexionsvermögens zerlegbar ist,
c) Analysieren (30) der Abfolge der Radar-Bilder im Innern der Bodenzone (ZT), um einerseits die Niederschlagszellen bezüglich ihrer Form und ihrer Bewegung dynamisch zu verfolgen, und um andererseits eine Radar-Niederschlagskarte bereitzustellen (40),

dadurch gekennzeichnet, daß im Schritt a) einerseits die Niederschlagsmessungen nahezu auf den Punkt genau synchron sind und andererseits die datierten Daten der Niederschlagsmessung Daten sind, die in einem ersten gewählten Zeitintervall gesammelt werden,

daß im Schritt c) die Radar-Niederschlagskarte durch Summierung bzw. Sammeln jedes Pixels des Bodenbereichs von gemessenen Niederschlagsdaten während eines zweiten gewählten Zeitintervalls in festgelegten Hauptniederschlagszellen auf Grundlage eines Schwellenkriteriums unter den Niederschlagszellen mit einer Interpolation der Formen und Positionen der Hauptniederschlagszellen während dieses zweiten Zeitintervalls festgelegt wird (40),
und daß außerdem die folgenden Schritte vorgesehen sind:

d) Wählen (50) unter den Niederschlagsmessern wenigstens ein Teilnetz (PA, PB), von denen wenigstens vier Niederschlagsmesser ungefähr 2 bis 4 Kilometer voneinander beabstandet und von wenigstens einer Hauptniederschlagszelle berührt sind, und
e) wenigstens teilweises Korrigieren (60) der Radar-Niederschlagskarte als Funktion der Beziehung zwischen den gesammelten Niederschlagsdaten der Niederschlagsmesser des Teilnetzes und der gesammelten Niederschlagsdaten, welche die Karte an den Orten der Niederschlagsmesser des Teilnetzes bilden, unter Berücksichtigung der Beziehung zwischen den ersten und zweiten Zeitintervallen,

was eine hervorragende Bewertung der Niederschläge auf jedem Quadratkilometer des Bodenbereichs erlaubt.

2. Verfahren nach Anspruch 1, dadurch gekennzeichnet, daß die Radar-Periodizität höchstens gleich ungefähr 6 Minuten beträgt, daß die Dauer des ersten Zeitintervalls höchstens gleich ungefähr 6 Minuten beträgt, und daß die Dauer des zweiten Zeitintervalls höchstens gleich ungefähr 30 Minuten beträgt.

3. Verfahren nach einem der Ansprüche 1 und 2, dadurch gekennzeichnet, daß der Vorgang c) vor der Analyse an den Vorgang c1) zur Behandlung von Bodenechos umfaßt, aufweisend:

- c11) eine globale Voranalyse (321) des Radar-Bilds, um zu bestimmen, ob es eine Zeit der Trockenheit oder des Niederschlags betrifft,
- c12) Aktualisieren (322) einer Bodenradar-Echokarte, wenn es sich um eine Trockenheitszeit handelt, und
- c13) wenn es sich um eine Niederschlagszeit handelt, Ersetzen (323) von Punkten, die auf der Bodenradar-Echokarte erscheinen, durch extrapolierte Pixel vorausgehender Bilder.

4. Verfahren nach Anspruch 3, dadurch gekennzeichnet, daß der Vorgang c) aufweist:

- c2) die Suche im aktuellen Bild nach Hauptniederschlagszellen (345) in Form von Pixelblöcken (343), die eine gewählte Niveaubedingung (341) erfüllen unter Annäherung an diese Hauptniederschlagszellen mit Zellen, die von vorausgehenden Bildern (347) ausgegeben sind, zur dynamischen Verfolgung ihrer Form und ihrer Bewegung,
- c3) die Bestimmung einer mittleren Bewegung von Pixeln außerhalb der Niederschlagszellen in dem aktuellen Bild in bezug auf wenigstens ein vorausgehendes Bild,
- c4) die Bewertung (413) von Niederschlägen, die sich aufgrund von Hauptniederschlagszellen als Funktion der Niveaus ihrer interpolierten Pixel aufgrund der geeigneten Geschwindigkeit jeder Zelle angesammelt haben, und
- c5) die Bestimmung (415) von Niederschlägen, die sich aufgrund von Pixeln, die außerhalb der Niederschlagszellen angeordnet sind, als Funktion ihres Niveaus aufgrund ihrer mittleren Bewegung angesammelt haben.

5. Verfahren nach Anspruch 4, dadurch gekennzeichnet, daß der Schritt c2) des Vorgangs c) aufweist:

- c21) die Auswahl (341) einer beschränkten Anzahl von Pixeln des Bilds, die ein wesentliches Niveau in der Gesamtheit dieses Bilds darstellen,
- c22) die Untersuchung (343) von aneinandergrenzenden Pixelblöcken unter den derart ausgewählten Pixeln unter Identifizierung der Form dieser Blöcke und Beseitigung von fehlerhaften Blöcken,
- c23) den Aufbau (345) einer neuen Niederschlagszellenliste ausgehend von diesen Blöcken aus ihren Formdaten,
- c24) die Annäherung (347) an diese Zellen dieser neuen Liste mit den Zellen von wenigstens einer vorausgehenden Liste unter Zuordnung einer Geschwindigkeit zu jeder Zelle, und
- c25) die Bewertung (349) der zukünftigen Verschiebung jeder Niederschlagszelle.

6. Verfahren nach einem der vorangehenden Ansprüche, dadurch gekennzeichnet, daß im Vorgang c) die Interpolation der Formen und Positionen der Pixel des Bilds während des zweiten Zeitintervalls eine zeitliche Resynchronisation der Radar-Pixel unter Berücksichtigung der mittleren Zeit aufweist, die durch den Regen zur Vereinigung mit dem Boden festgelegt ist, wobei diese Zeit mit der mittleren Werthöhe der Pixel verknüpft ist, die ihrerseits mit dem radialen Abstand von dem Bodenbereich in bezug auf das Radar und auf Seiten des Radars damit verknüpft ist, welcher Bodenbereich beobachtet wurde.

7. Verfahren nach einem der vorangehenden Ansprüche, dadurch gekennzeichnet, daß der Vorgang e) aufweist:

- e1) das Sammeln von einzelnen reellen Niederschlagsdaten der Niederschlagsmesser des gewählten Teilnetzes oder der gewählten Teilnetze im zweiten Zeitintervall,
- e2) das Durchführen einer statistischen Annäherung zwischen den derart gesammelten reellen Niederschlagsdaten und den entsprechenden bewerteten Niederschlagsdaten in der Niederschlagskarte, und
- e3) die Korrektur von Punkten der Niederschlagskarte als Funktion des Ergebnisses dieser statistischen Annäherung.

8. Verfahren nach Anspruch 7, dadurch gekennzeichnet, daß es sich bei der statistischen Annäherung um eine lineare Regression handelt.

9. Verfahren nach einem der vorangehenden Ansprüche, dadurch gekennzeichnet, daß der Vorgang e) außerdem die Steuerung der Entsprechung zwischen den reellen Niederschlagsdaten von zumindest bestimmten der Niederschlagsmesser, die nicht zu den Teilnetzen gehören, und den entsprechenden Niederschlagsdaten in der korrigierten Karte aufweist.

10. Verfahren nach einem der vorangehenden Ansprüche, dadurch gekennzeichnet, daß der Vorgang a) die Übertragung der reellen Niederschlagsdaten zu einer Verarbeitungsstation aufweist, die für die die Niederschlagsmesser

EP 0 578 544 B1

steuernde Gesamtheit relevant sind,

daß der Vorgang b) die Übertragung der Radar-Bilddaten, die für den Bodenbereich von belang sind, zu dieser Verarbeitungsstation aufweist,
daß die Vorgänge c) bis e) in dieser Verarbeitungsstation durchgeführt werden, und
daß der Vorgang c) die Steuerung der empfangenen Radar-Bilder insbesondere durch Vergleich zwischen aufeinanderfolgenden Bildern aufweist.

11. Verfahren nach einem der vorangehenden Ansprüche, dadurch gekennzeichnet, daß die Pixel des Radar-Bilds auf mehreren Reflexionsvermögenniveaus abgetestet werden, die zwischen ungefähr 25 dBZ und ungefähr 56 dBZ liegen.

**Claims**

1. Process for the assessment of precipitation over an area of land, of the type comprising the following stages:

a) in the land zone (ZT) there are automatic pluviometers (P00-P0n) able to supply dated information on local rainfall,
b) a meteorological radar (R1) is provided which can supply, with a given radar periodicity, a radar image representative of the pluviogenic cells over a radar working area which covers the land zone, where the said image can be broken down into pixels sampled over a plurality of levels of reflectivity,
c) inside the land zone (ZT), the sequence of radar images is analyzed (30) in order firstly to monitor dynamically the pluviogenic cells in their form and movement and secondly to establish (40) a radar rainfall map,

characterised in that in stage a) firstly the pluviometers are synchronised approximately to the minute and secondly the dated rainfall information consists of data cumulated over a first selected time interval,

in that in stage c) the rainfall radar map is produced (40) by cumulation, in each pixel of the said land zone, of the precipitation data measured, over a second selected time interval, from main pluviogenic cells above a threshold criterion determined from the pluviogenic cells, with interpolation of the forms and positions of the main pluviogenic cells during this second time interval,
and that in addition are provided the stages:

d) in which from the pluviometers is selected (50) at least one sub-network (PA, PB) of at least four pluviometers spaced approximately 2 to 4 kilometres apart and covered by at least one main pluviogenic cell, and
e) the radar rainfall map is corrected (60) at least partly as a function of the relation between the cumulative rainfall data from the pluviometers of the sub-network and the cumulative precipitation data forming the map at the locations of the sub-network pluviometers, taking into account the ratio between the first and second time intervals,

which allows an excellent estimation of the precipitation on each square kilometre of the land zone.

2. Process according to claim 1 characterised in that the radar periodicity is at least equal to approximately 6 minutes, in that the duration of the first time interval is at least equal to approximately 6 minutes and in that the duration of the second time interval is at most equal to approximately 30 minutes.

3. Process according to any of claims 1 and 2, characterised in that the operation c) comprises, before the analysis, an operation c1) of processing ground echoes, comprising:

- c11) a global preanalysis (321) of the radar image to determine whether it concerns a dry or a wet period,
- c12) the updating (322) of a radar ground echo map in dry periods and
- c13) in wet periods, the replacement (323) of the points belonging to the radar ground echo map by pixels extrapolated from previous images.

4. Process according to claim 3, characterised in that the operation c) comprises:

- c2) research in the current image of main pluviogenic cells (345), in the form of pixel blocks (343) meeting a selected level condition (341), with comparison of these main pluviogenic cells with those resulting from previous images (347) for the dynamic monitoring of their form and movement,

- c3) determination of an average movement of pixels outside the pluviogenic cells in the current image in relation to at least one previous image,
- c4) estimation (413) of the cumulative rainfall due to the main pluviogenic cells as a function of the levels of their interpolated pixels taking into account the inherent speed of each cell, and
- c5) the estimation (415) of the cumulative rainfall due to pixels located outside these pluviogenic cells as a function of their level, taking into account their average movement.

5. Process according to claim 4, characterised in that stage c2) of operation c) comprises:

- c21) the selection (341) of a restricted number of pixels from the image presenting an important level in this image as a whole,
- c22) search (343) for adjacent pixel blocks from the pixels thus selected, with identification of the form of these blocks and elimination of erratic blocks,
- c23) creation (345) of a new list of pluviogenic cells from these blocks and from their form data,
- c24) comparison (347) of the cells of this new list with the cells of at least one previous list, allocating a speed to each cell, and
- c25) estimation (349) of the future movement of each pluviogenic cell.

6. Process according to any of the previous claims, characterised in that in operation c), the interpolation of the forms and positions of the image pixels during the second time interval comprises a temporal resynchronisation of the radar pixels taking into account the average time taken for the rain to reach the ground, this time being linked to the average height of the value of the said pixels which is in turn linked to the radial distance of the land zone in relation to the radar and the radar site with which this land zone is observed.

7. Process according to any of the previous claims, characterised in that operation e) comprises:

- e1) cumulation over the second time interval of the actual individual rainfall data from the pluviometers of the sub-network or networks selected,
- e2) implementation of a statistical comparison between the actual rainfall data thus cumulated and the estimated corresponding rainfall data in the rainfall map, and
- e3) correction of the points of the rainfall map as a function of the result of this statistical comparison.

8. Process according to claim 7, characterised in that the statistical comparison is a linear regression.

9. Process according to any of the previous claims, characterised in that operation e) also comprises monitoring the correlation between the actual rainfall data of at least some of the pluviometers which do not belong to the sub-networks and the corresponding rainfall data in the corrected map.

10. Process according to any of the previous claims, characterised in that the operation a) comprises the transmission of actual rainfall data to a processing station which forms part of an entity managing the pluviometers,

in that operation b) comprises the transmission of radar image data concerning the land zone to this processing station,
in that operations c) to e) are conducted in this processing station and
in that operation c) comprises monitoring of the radar images received, in particular by comparison between consecutive images.

11. Process according to any of the previous claims, characterised in that the radar image pixels are sampled over a plurality of levels of reflectivity between approximately 25 dBZ and approximately 56 dBZ.

FIG.1

R1

PØO                    PØn

RADAR

ST

FIG. 2

TRAITEMENT
ECHOS DE SOL — 320

SEC                SEC OU            PLUVIEUX
                 PLUVIEUX?
                              — 321

322 —

MISE A JOUR
CARTES DES
ECHOS DE SOL

323

REMPLACER PIXELS
ECHOS DE SOL
PAR "PLUIE EXTRA.
POLEE"

324

IMAGE RETRAITEE
ECHOS DE SOL

FIG. 7

# FIG.3

MM/H

0.4    1.    3.   10.   20.   30.   50.   100

# FIG.4

MM/H

0.4    1.    3.   10.   20.   30.   50.   100

# FIG.5

MM/H

0.4    1.    3.  10.  20.  30.  50.  100

< 

FIG. 6

ADVECTION ~340

↓

DETERMINER SEUIL ~341

↓

RECHERCHER BLOCS CONTIGUS ~343

↓

IDENTIFICATION DES BLOCS (OU CELLULES DE PLUIE) ~345

↓

RELATIONS AVEC BLOCS DES IMAGES PRECEDENTES ~347

↓

EXTRAPOLATION DEPLACEMENTS FUTURS ~349

FIG. 8

411~ IMAGE + CELLULES DE PLUIE + DEPLACEMENTS

↓

413~ SOMME DES PLUIES DUES AUX CELLULES

↓

415~ SOMME DES PLUIES DUES AUX POINTS HORS CELLULES

FIG. 9

# FIG.10

# FIG.11

MM

1 2 3 4 5 6 7

# FIG.12

MM

| 1 | 2 | 3 | 4 | 5 |
|---|---|---|---|---|
| < | | | | |

# FIG.13

# FIG.14

MM

1     3     5     7     9    11    13

| NOM | PLUVIO | RADAR* désynchro- nisé d'une minute | RADAR* synchronisé | CAUSE DE REJET |
|---|---|---|---|---|
| R801 | 4,6 | 2,5 | 2,6 | |
| IG02 | 3,6 | 2,5 | 2 | |
| BR03 | 0,9 | 0,8 | 0,8 | |
| BG04 | 2,5 | 2,2 | 1,8 | |
| VI 05 | 2,6 | 1,8 | 1,6 | |
| DR06 | 0,8 | 0,8 | 0,8 | |
| EC07 | 1 | 0,9 | 0,9 | |
| LO08 | 1 | 1,4 | 0,8 | |
| NM09 | 6,9 | 2,8 | 2,8 | Hors domaine d'application de la régression |
| DU 10 | 0,6 | 0,8 | 0,8 | |
| CL 11 | 4,4 | 2,2 | 2,6 | |
| PN 12 | 0,7 | 0,7 | 0,5 | |
| LV 13 | 3,7 | 2,4 | 2 | |
| NC 14 | 5,2 | 3,1 | 3,2 | |
| BM 15 | 0,8 | 0,7 | 0,7 | |
| NP 16 | 5,2 | 2,5 | 2,6 | |
| NE 17 | 6,4 | 2,1 | 2,6 | Hors domaine d'application de la régression |
| PM 18 | 1,8 | 1,6 | 1,3 | |
| MT 19 | 5,2 | 1,9 | 1,8 | Environné de pixels radar de valeur beaucoup plus élevée |
| AM 20 | 3,6 | 1,4 | 1,1 | Environné de pixels radar de valeur beaucoup plus élevée |
| MO 21 | 0,4 | 0,8 | 0,8 | |
| OU 22 | 0,6 | 0,5 | 0,5 | |
| TF 23 | 3,2 | 2,1 | 2,1 | |

* RADAR: Pixel correspondant au pluvio sur l'image radar advectée sur la même période 23h00 - 23h15, le 12.11.91

FIG. 15

FIG. 16